(19)

Europäisches
Patentamt
European
Patent Office
Office européen
des brevets

(11) **EP 1 732 702 B1**

(12) **EUROPEAN PATENT SPECIFICATION**

(45) Date of publication and mention
of the grant of the patent:
**06.06.2012 Bulletin 2012/23**

(21) Application number: **04756670.8**

(22) Date of filing: **06.07.2004**

(51) Int Cl.:
***B05B 13/04*** *(2006.01)*      ***B05B 1/00*** *(2006.01)*

(86) International application number:
**PCT/US2004/021575**

(87) International publication number:
**WO 2005/023433 (17.03.2005 Gazette 2005/11)**

(54) **NOZZLE FOR USE IN ROTATIONAL CASTING APPARATUS**

DÜSE ZUR VERWENDUNG IN ROTATIONSGIESSVORRICHTUNG

BUSE UTILISEE DANS UN APPAREIL DE COULEE ROTATIF

(84) Designated Contracting States:
**AT BE BG CH CY CZ DE DK EE ES FI FR GB GR
HU IE IT LI LU MC NL PL PT RO SE SI SK TR**

(30) Priority: **22.08.2003 US 646343
10.09.2003 US 659732
07.06.2004 US 862248**

(43) Date of publication of application:
**20.12.2006 Bulletin 2006/51**

(73) Proprietor: **Kastalon, Inc.
Alsip, IL 60803-1810 (US)**

(72) Inventors:
• **DEMENT, R., Bruce
Lemont, IL 60439 (US)**

• **WERSTLER, Paul
Evergreen Park, IL 60805 (US)**
• **SNYDER, Robert, G., III
Homer Glen, Illinois 60491 (US)**

(74) Representative: **Ruschke, Hans Edvard
RUSCHKE HARTMANN MADGWICK & SEIDE
Patent- und Rechtsanwälte
Postfach 86 06 29
81633 München (DE)**

(56) References cited:
**JP-A- 11 319 636      US-A- 3 101 906
US-A- 3 419 220      US-A- 4 017 240
US-A- 5 658 386      US-A- 5 931 392
US-A1- 2002 088 881      US-A1- 2002 088 881**

## Description

## BACKGROUND OF THE INVENTION

The present invention is directed to a nozzle for use in a rotational casting machine used for applying one or more coats of liquid elastomer, such as polyurethane, to a rotating body, such as a pipe, cylinder, and the like; whereby an elastomer covering or coating is applied to the exterior or interior of the pipe, cylinder, or the like. The body being coated may be used in steel or paper mills, or many other industries, in order to protect the body proper during end-use, as well as for providing other desired properties. Rotational casting machines, that rotationally mount a body to be coated with polyurethane or other liquid elastomer, are disclosed, for example, in U.S. Patent Nos. 5, 601,881 and 5,658,386 - Grimm, et al., and include a translational and vertically-adjustable mixing head in which is formed the polyurethane to be used for coating the body. Polyurethane chemicals such as polyols, isocyanates, catalysts, etc. are metered to the mixing head. In this process the liquid materials are dispensed onto the body being coated and react very quickly to produce the solid polyurethane that will cover or coat the body. The hardness of the elastomer-coating is controlled by the types of polyols used and their mixture-ratio, along with the corresponding adjustment of the amount of isocynate added to the mixture in the mixing head, in order to obtain hardness in both Shore A to Shore D ranges. The hardness desired for the elastomer depends upon many factors, such as end-use of the body being coated.

A considerable problem with rotational casting machines is the trade-off of forming a liquid polyurethane having a desired viscosity and reactivity in order to prevent run-off or dripping of the applied elastomer from the body being coated during the coating process, and the need to prevent the clogging of the dispensing head attached to, and forming part of, the mixing head during the coating-application process. If the viscosity is made too great or reactivity too fast, then the dispensing head tends to become clogged faster, requiring more frequent down-time in order to unclog and clean the dispensing head. Presently-used dispensing heads, such as that disclosed in above-mentioned U.S. Patent Nos. 5,601,881 and 5,658,386, are sheet-die extruders or nozzles, which sheet-die nozzles are provided with an exit slot the width of the nozzle, in order to ensure that a wider swath of coat-application is applied. However, the problem with these prior-art dispensers is that each hypothetical section of the liquid elastomer exiting the dispensing head at the exit thereof has not, typically, had the same dwell-time in the dispensing nozzle along the width and the length thereof, whereby there is not ensued that the exothermically formed elastomer has the same properties throughout when applied to the body to be coated. Minimum dwell-time and uniform discharge from the nozzle in order to ensure equality and sameness of properties throughout is a highly desirable property in order to prevent build up, hardening or curing of the liquid elastomer therein and the concomitant clogging of the nozzle and exterior build up of whiskers or "stalactites" due to differential residence-time of the material in the nozzle. Moreover, the height and width of the slit of these sheet die nozzles are dependent upon the viscosity and/or the reactivity of the material being dispensed, thus necessitating the replacement of one sheet-die with another one having a different slit-height and slit-width when materials of differing viscosity/reactivity are used. However, even changings sheet-dies in order to accommodate materials of different viscosity/reactivity in order to prevent frequent clogging of the sheet-die in order to obtain the desired coating thickness, has still not solved the problem of the frequent clogging and associated frequent down-times when sheet-die nozzles are used. This may be attributed to the fact that the flow of the material in the dispensing nozzle is not laminar, causing variation in dwell-time of the liquid in the nozzle, such that the dwell-time for some segments of the liquid are greater than a required minimum, leading to at least partial solidification of those segments in the interior of the nozzle. Over time, a build-up of solidified material develops, causing clogging at or near the exit, as well as interiorly thereof which forms the build up of solidified whiskers or "stalactites" of reacted material that interferes with the material deposition on the body.

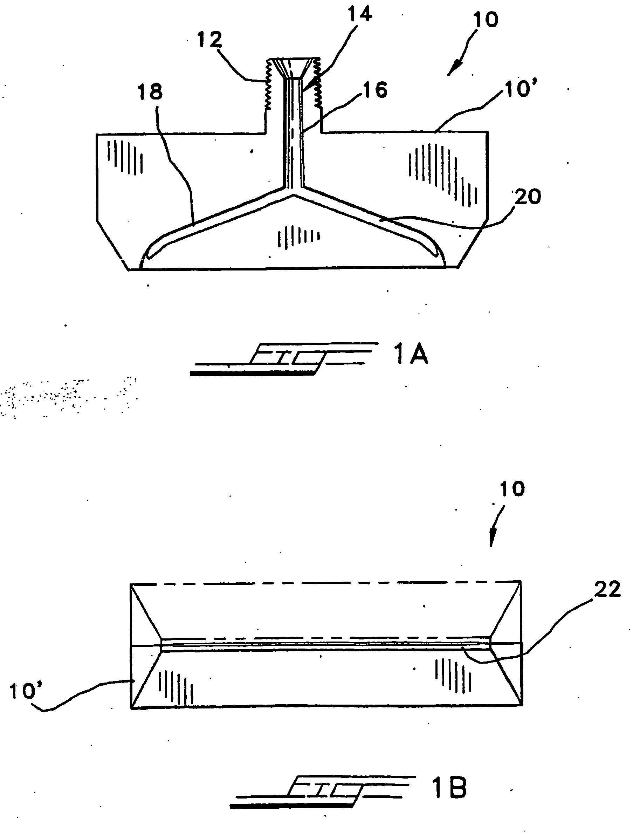

Figs. 1A and 1B show a conventional sheet-die nozzle 10 used on a typical and conventional rotational casting machine discussed above. The sheet-die nozzle 10 includes a mixing-head attaching section 12 for securing the nozzle to a mixing head in which is contained the liquid elastomer, such as polyurethane, to be dispensed. The interior of the nozzle 10 contains a circular-cross-sectioned passageway 14 through which the liquid elastomer flows from the mixing head to the exit of the nozzle. As can be seen in Fig. 1A, the interior passageway consists of a first main line 16 which ends in an upper frustoconical-shaped entrance that immediately fluidly communicates with the exit or outlet of the mixing head. The main line 16 branches off into two branch-lines 18, 20, each of which terminates into a sheet-die slit opening 22, best seen in Fig. 1B, which slit-opening 22 extends substantially the full width of the nozzle-housing 10'. The exit of the sheet-die nozzle is a relatively elongated and narrow slit or opening, so that a wide swath of the liquid elastomer may be applied to the body to be coated, and to ensure that the reacting time of the liquid is sufficiently short enough so as to prevent dripping of the applied liquid off of the element to which it has been applied. If the exiting stream of liquid material were too thick, or tall, the interior portion of the reacting liquid while still in a fluid state would not have built enough viscosity to support the column height of the stream and would run or drip off the body to which it was applied. If the reactivity were adjusted to build sufficient viscosity quickly enough to support the stream column height, the stream would not be liquid enough to flow onto the precedingly-applied material and an uneven coating would result.

In a typical sheet-die nozzle 10, manufactured by Bayer Corporation, the radius of the main passageway 16 is approximately 2.01mm (.079 in.) while the radius of each of the branch lines 18,20 is approximately 1.50 mm (.059 in) while the slit-opening 22 has a height of approximately 0.51 mm (.020 in). It may, therefore, be seen that liquid material flow through the interior passageway 14 of the prior-art sheet-die nozzle 10 has considerable turbulent and boundary-layer flow characteristics, causing increased dwell-time of a hypothetical section of the flowing liquid material, which, in turn, causes increased clogging of the passageway 14 and slit-opening 22, since the greater the time any section of liquid material is present in the passageway 14, the greater the likelihood it will start to cure. This has, in fact, been one of the serious problems of the prior-art nozzle for rotational casting machines; that is, in a relatively short period of time, the nozzle becomes clogged and unusable, requiring the disassembly and cleaning thereof, which also causes considerable down-time to the rotational casting machine. Moreover, since the slit-opening 22 is fed by two branches feeding into the ends of the slit-opening, the liquid- material application onto to the body to be coated is ofttimes inconsistent and uneven, and is also limiting in the range that the distance the nozzle may be relative to the body to be coated.

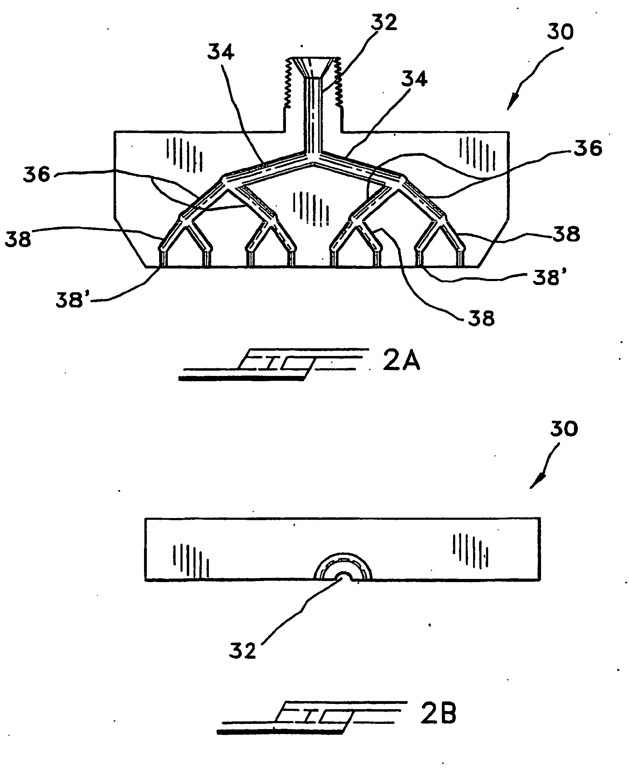

Figs. 2A and 2B show another prior-art type of nozzle 30 used in rotational casting machines. The nozzle 30 differs from the nozzle 10 of Figs. 1A and 2B in that, in addition to the first main line 32, and two branch passageways 34, there are provided four sub-branches 36 with two extending from each branch 34, and eight capillaries 38, two from each sub-branch 36. Each capillary 38 ends in a circular outlet opening 38' that together constitute the dispensing outlet for the nozzle 30. Thus, rather than an elongated slit-opening as in the nozzle 10 of Figs. 1A and 1B, a series of equally-spaced openings, such as eight, are provided, through which the flowing liquid material is dispensed, as can be seen in Fig. 2B. In a typical, prior-art nozzle 30 manufactured by Uniroyal ChemicalDivision of Crompton Corp., the diameter of the circular-cross-sectioned main line 32 and two branches 34 is approximately 1.98mm (.078 in). The diameter of each sub-branch 36 is approximately 1.6mm (.063 in) while the diameter of each capillary 38 is approximately 1.19 mm (.047 in). Each capillary terminates into an exit bole of approximately 0.787mm (.031 inch) in diameter. The nozzle 30, by using equally-spaced apart dispensing holes 38', has helped to overcome the drawback of uneven and inconsistent dispensing flow and application of the slit-opening 22 of the prior-art nozzle 10 of Figs. 1A and 1B. However, the prior-art nozzle 30 has not addressed nor overcome the problem of consistent and frequent clogging of interior passageways described above with regard to the nozzle 10 of Figs. 1A and 1B. In fact, owing to the narrowing of the outlet opening or holes 38' of the nozzle 30, in some circumstances the problem with clogging and flow-impairment has been aggravated by the prior-art nozzle 30 of Figs. 2A and 2B.

In conjunction with the need for a relatively thin exit stream of liquid material from the nozzle to ensure adequate support for the mass of the applied liquid material to the body to be coated, the rotational speed of the body being coated, and the relative translational speed between the nozzle and rotating body, must be coordinated with the speed of the liquid material exiting from the nozzle. If the rotational speed of the rotating body were to be too geat in comparison to the exit speed of the liquid material from the nozzle-exit, then the applied coat may be thinner than requited, and require additional coating layers to be applied to the rotating body, reducing the efficiency of the process, and also would cause air to become entrapped in the applied liquid, causing air blisters to form, since there would not be enough time for the applied stream to push out the air between the applied stream and the surface of the rotating body. On the other hand, if the rotational speed were to slow, then productivity and efficiency of the process would be adversely affected, would also increase the likelihood of premature curing, causing the eventual clogging of the nozzle, and uneven application of the coating to the rotating body. Similarly, if the relative translational motion between the exit-nozzle and the rotating body were too great, then air blisters would form, and, in addition, an applied coating of liquid material thinner than is required and optimal would be formed. Similarly, if the relative translational motion between the exit-nozzle and the rotating body were too slow, the efficiency and productivity of the process would be adversely affected, and would also cause an applied coating that would be too thick, thus causing dripping of the applied liquid from the body being coated, as well as potentially uneven thickness of the applied coat.

The need and requirement for optimal correspondence between exit speed of the liquid from the nozzle, the thickness of the exiting stream of liquid, the rotational speed of the rotating body being coated relative to this exit speed of the liquid from the nozzle, and the relative translational speed between the nozzle and the rotating body being coated has imposed significant constraints as to linear distance the exit of the nozzle of the rotating casting, machine may be from the surface of the rotating body being coated. Presently-used rotational casting machines provide an outer limit of only approximately 5 mm. of the nozzle-exit from the surface of the rotating body being coated. A distance greater than 5 mm. has been found to cause excessive clogging of the nozzle, with a concomitant increase of downtime of the machine for unclogging the nozzle. This excessive clogging ensues from the fact that as the nozzle-exit distance from the surface to be coated is increased, the exit-speed of the liquid must be increased in order to compensate therefor. The increase in speed of the liquid through the nozzle increases turbulent flow in the nozzle, thus increasing the dwell-time of the liquid in the nozzle, and the increased curing thereof in the nozzle, with the ensuing clogging of the nozzle, as discussed hereinabove. Besides the increased clogging of the nozzle, air blisters form in the applied coating of liquid, for the reasons described hereinabove due to the increased exit speed of the liquid from the nozzle-exit

Another considerable problem with the sheet-die nozzle of Fig. 1 is that the size of the rotating body that may be coated with the liquid exiting there from is limited. Cylindrical bodies having a diameter less than approximately 127 mm (five inches) have not been able to effectively coated with liquid. This is because of the requirement described above for correlation between the speed of the rotational body to be coated, the exit-speed of the liquid from the nozzle-exit, and the turbulent flow of the liquid in the nozzle proper and the increased dwell-time of the liquid in the nozzle associated therewith.

From document US 2002/88881, which discloses a nozzle according to the preamble of claim 1, a nozzle is known from the scouring of surfaces with a fluid laden with solid particles, which has an inlet chamber with a constant circular cross-section, an intermediate conduit with a variable section, the walls of which are convergent from the chamber to an oblong neck which has an area of which is equal to that of the circular section of the inlet chamber, and an outlet tube with a variable oblong section, the walls of which are divergent from the neck to an outlet orifice of oblong section.

## SUMMARY OF THE INVENTION

The invention is as defined in claims 1 and 2 below, with optional features defined in the dependent claims. Embodiments have application in rotational casting machines.

An advantage of the present invention is that an improved nozzle for a rotational casting machine, in accordance with it can increase the efficiency and productivity of the rotational casting machine, reduces downtime thereof, they can more effectively coat cylindrical bodies, and effectively coat cylindrical bodies of smaller diameter, than hitherto possible, they are better able to prevent air-blistering of the coating.

Described herein is an improved nozzle for a rotational casting machine which includes a main inlet passage, a plurality of branch-passageway and sub-branch passageways, and a plurality of interior discharge-passageways, where each interior discharge-passageway of the nozzle defines an inlet-section, a main passageway section and an outlet-opening section, which main passageway section has a plurality of different cross-sectional shapes, which cross-sectional shapes increase in cross-sectional area in a direction from the inlet-section toward the outlet-opening section, which outlet-opening section terminates in an outlet opening having a substantially narrow, elongated shape.

Also described is an improved nozzle for a rotational casting machine which, in a second embodiment, includes a plurality of interior discharge-passageways, where the plurality of different cross-sectional shapes initially are circular, then varying elliptical cross-sectional shapes, and finally varying elongated-like cross-sectional shapes that continually transform into the substantially elongated-like shape of the outlet.

Further described is a nozzle with a plurality of interior discharge passageways such that the exit of the nozzle of the invention defines a plurality of spaced-apart discharge or exit outlets or openings, with each discharge or exit openings having the same, slit-like shape, whereby a wider spreading of material during discharge is provided without significantly increasing flow.

A liquid- ispensjng nozzle for rotational casting machines may comprise a liquid-flow interior passageway that changes shape along the longitudinal axis thereof from inlet to outlet, but which maintains a constant cross-sectional area throughout the changing cross-sectional shapes, whereby laminar flow occurs throughout the interior flow-passageway of the nozzle, to thus minimize the dwell-time of the liquid in the nozzle, and, thereby, considerably reduce and minimize clogging of the nozzle.

In accordance with the nozzle of herein described, the exit or outlet thereof is formed as a narrow, elongated slit or opening, in the manner somewhat similar to the slit or opening of the prior-art sheet-die nozzle, in order to maintain the advantages thereof. However, the interior passageway of the nozzle continually changes shape from the inlet to the outlet thereof, in order to ensure a constant cross-sectional area of the interior passageway along the length thereof, and in order to arrive at the desired narrow, elongated outlet, ensuring consistent pressure of the liquid across the entire area, whereby laminar flow of the liquid is achieved with the concomitant reduced dwell-time of the liquid polyurethane therein, in order to reduce in-nozzle reaction and subsequent clogging of the nozzle.

Tin a second arrangement described a the liquid-dispensing nozzle for rotational casting machines comprises a plurality of liquid-flow interior discharge-passageways each of which has an inlet connected to a sub-branch tube, which sub-branch tube is, in turn, is fluidly connected to a main branch that, in turn, is connected to a main inlet-passageway having the inlet that is directly connected to mixing head. Each discharge-passageway, or exit-passageway, changes in crosssectional shape along the longitudinal axis thereof from its inlet to its outlet such that the cross-sectional area from the inlet to the outlet thereof gradually and minimally increases, whereby at least substantial laminar flow of the liquid is achieved with the concomitant reduced dwell-time of the liquid therein, in order to reduce in-nozzle reaction and subsequent clogging of the nozzle. The exit of the nozzle itself is constituted by the plurality of spaced-apart exit-openings or outlets of the discharge-passageways, where each such exit-opening or outlet is formed as a narrow, elongated slit or opening.

## BRIEF DESCRIPTION OF THE DRAWINGS

Reference is had to the accompanying drawings, wherein:

Figure 1A is a top sectional view of a prior-art sheet-die nozzle, used in a rotational casting machine;
Figure 1B is a front view thereof;
Figure 2A is a top sectional view of another prior-art nozzle used in a rotational casting machine;
Figure 2B is a front view thereof;
Figure 3A is a side elevational view of the each half of the nozzle for a rotational casting machine of the present invention;
Figure 3B is a top view thereof;
Figure 3C is a cross-sectional view taken along line C-C of Fig. 3B;
Figure 3D is a cross-sectional view taken along line D-D Fig. 3B;
Figure 3E is a cross-sectional view taken along line E-E of Fig. 3B;
Figure 3F is a first end view of the half of the nozzle of Fig. 3A;
Figure 3G is a second end view thereof;
Figure 4A is a chart showing the various transverse, cross-sectional shapes of the interior flow-passageway of the nozzle of the present invention each cross section having the same cross-sectional area along the length nozzle of the present invention;
Figure 4B is an end view of the nozzle-outlet of the nozzle of the present invention;
Figure 4C is a chart showing the x-y-z coordinate-dimensions of the various cross sections of Fig. 4A;
Figure 5A is a first end view of the each half of the nozzle for a rotational casting machine according to a second embodiment of the invention;
Figure 5B is a second end view thereof;
Figure 5C is a top view thereof;
Figure 6A is a chart showing the various transverse, cross-sectional shapes of the interior of each discharge-passageway of the nozzle of Figs. 5A-5C;
Figure 6B is an end view of the outlet of each discharge-passageway of the nozzle of Figs. 5A-5C; and
Figure 6C is a chart showing the x-y-z coordinate-dimensions of the various cross sections of Fig. 6A.

## DETAILED DESCRIPTION OF THE INVENTION

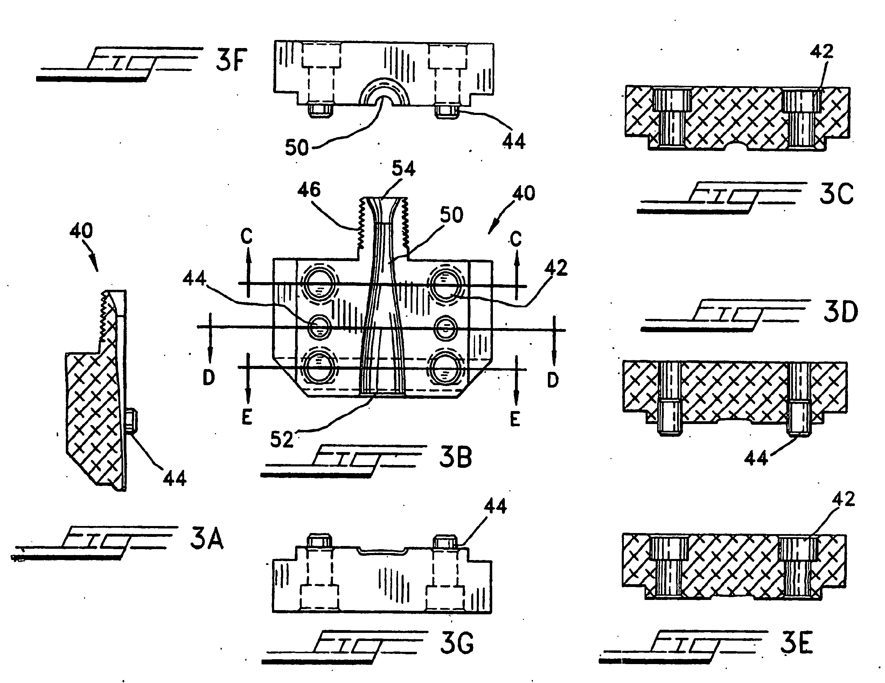

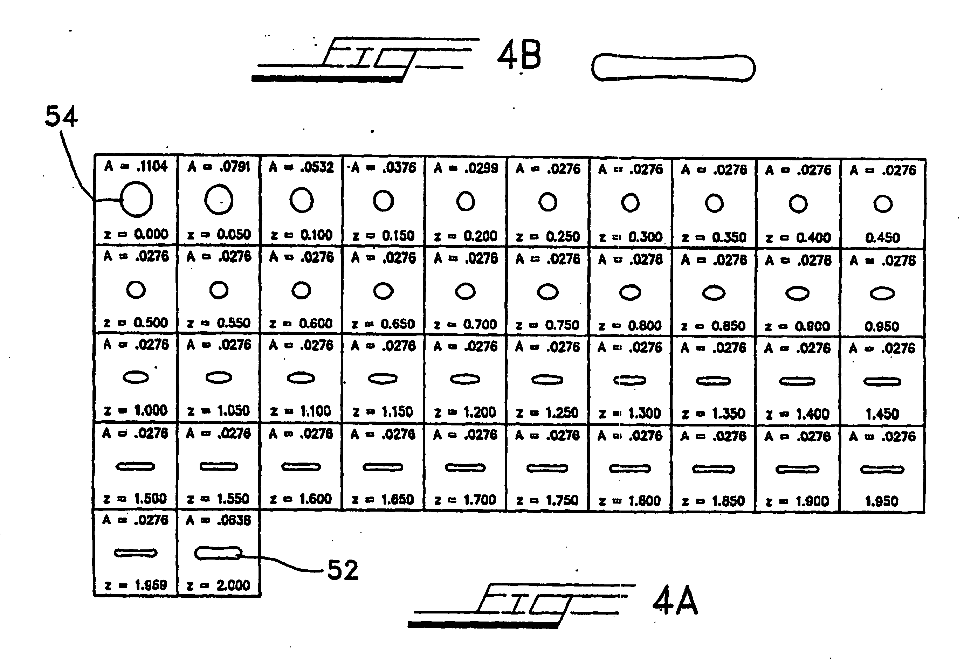

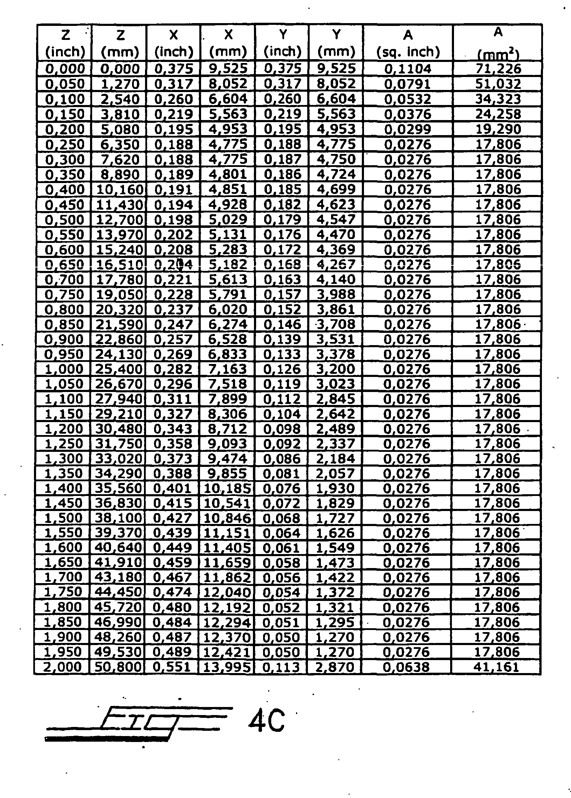

Referring now to the drawings in greater detail, and to Figs. 3A-G for now, there is shown the first embodiment of the invention, which Figs. 3A-G show a half-section 40 of the nozzle, it being understood that the other half-section of the nozzle of the invention is substantially identical. Each half section 40 has a plurality of holes 42 through which pass bolts for securing the two-halves together. Alignment pins 44 in the half-section 40 cooperate with openings in the other-half section for initially aligning the half-sections together. Each half-section also has an upper threaded portion 46, whereby after the two half-sections have been attached, provide an attachment section for securing the nozzle to the mixing head of a rotational casting machine in the conventional manner, in which mixing head are mixed the pre-polymers for forming the polyurethane used to coat a rotating body held by the rotational casting machine.
In accordance with the nozzle of the present invention, the nozzle of the invention defines one main, unbranched interior passageway 50 through which the liquid from the mixing head is dispensed onto a rotating body held by the rotational casting machine. The interior passageway of the nozzle of the invention periodically changes cross-sectional shape, as further described hereinbelow. The interior flow passageway is so configured as to ensure that the flow of the liquid is entirely laminar therethrough. This laminar flow ensures the shortest possible dwell-time of any hypothetical element of liquid therein. Since the liquid polyurethane has been formed by exothermic reaction in the mixing head via the metered in chemical reactants, and since the liquid has a short, reaction time once exiting the mixing head, any delay of passage through the nozzle would cause the liquid to solidify within the nozzle passageway, to cause the clogging thereof, as has been the problem with prior-art, rotational casting machine dispensing nozzles, as described hereinabove. By ensuring laminar flow throughout the length of the passageway of the nozzle of the invention, dwell time is reduced, and the concomitant reaction of the liquid and clogging of the passageway thereby is greatly reduced as compared to prior art rotational casting machine dispensing nozzles.
Referring now to Figs. 4A-4C, since the nozzle of the present invention has especial function for use in rotational casting machines, the exit opening 52 of the passageway 50 of the nozzle is one that dispenses the liquid material over a wide swath, for the reasons given hereinabove; that is, the exit opening 52 is made relatively elongated in width, in the "x" coordinate direction, yet narrow in height, in the "y" coordinate direction, as depicted in Fig. 4B. Referring to Fig. 4A, there is shown a series of transverse cross-sectional views of the nozzle of the invention along the longitudinal axis of the passageway 50, it being noted that value "A" indicated refers to the cross-sectional area of the respective cross section. The distance along the longitudinal axis from the inlet 54 (Fig. 3B) is defined as the "z" dimension in Figs. 4A and 4C. The units of the dimension "z" is Fig 4A is inches and the units of dimension "a" is square inches. Fig. 4C shows the corresponding x, y and z dimensions for the transverse cross sections of Fig. 4A, with "x", "y" , and "z" all given in both SI units and inches. It is to be understood that the cross section of the inlet 54 of the passageway has a zero "z" value, while the outlet 52 of the passageway has a "z" value of 50.8mm (two inches) in the preferred embodiment where the length of the entire passageway is 50.8mm (two inches) it also being understood that the length of the passageway may vary depending upon type of liquid coating being dispensed, the sizes of the outlet 52 and inlet 54, and other variables that would be clear to one of ordinary skill in the art. Fig 4C gives the dimensions of "a" in both square inches and $mm^2$.

Referring again to Fig. 4A, the transverse cross sections from z = 0 until z = 6.35mm (.250 in) is a transitional inlet section of the interior passageway of the nozzle 50, with each inlet section being of circular cross section in correspondence with the circular exit-opening of a conventional mixing head associated with a conventional rotational casting machine. At z = 0, which is the inlet 54, the diameter thereof is the same as the circular exit-opening of a conventional mixing head. For the next four transverse cross sections from z = 1.27mm(.05) until z = 6.35mm(.25), the diameter of each circular cross section diminishes, diminishing the cross-sectional area of the transverse cross section from an inlet-cross-sectional area of $71.226mm^2$ (0.1104sq in) to a cross-sectional area of $17.806mm^2$(0.0276 sq in). at z= 6.35mm (0.25 ins). This transitional inlet section of the interior passageway of the nozzle 10 defines a venturi-flow inlet-section, whereby laminar flow is achieved therethrough. The cross-sectional area "A" of $17.806 \ mm^2$ (0.0276 sq in) of each subsequent transverse cross section until z=50.01mm (1.969 ins) remains constant until reaching the outlet 52 at z=50.8mm(2.000 ins). Maintaining this equality of cross-sectional area from z=6.35mm(0.250 ins) until z=50.01mm (1.969 ins) ensures laminar flow of the liquid polyurethane therethrough. As can be seen in Fig. 4A, in order to maintain the same cross-sectional area from the inlet-section until reaching the desired elongated outlet 52, the cross-sectional shape of the passageway continually changes. From z= 7.62 mm (0.300 ins) until 12.7 mm (0.500 ins), the cross section is circular. From z= 16.51 mm (0.650 ins), the cross section starts a transition into an ellipse-like shape. This ellipse-like cross-sectional shape continually changes, such that the major and minor axes of the ellipse-like cross-sectional shape changes until approximately z= 31.75 mm (1.250 ins). After z= 31.75 mm (1.250 ins), the cross-sectional shape transforms into a more elongated slot-like opening until z= 40.64 mm (1.600 ins). At z= 41.91 mm (1.650 ins), the cross-sectional shape starts a transition into an elongated, flared-end shape, or an oval-of-Cassini shape, where the end-portions of the cross-section are slightly flared as compared with the center-section. Finally, at the outlet or exit 52, the cross-sectional shape is the same as that of the cross-sectional areas from z= 41.91 mm (1.650 ins) to z= 50.01 mm (1.969 ins), but the cross-sectional area thereof is considerably greater at $41.161 \ mm^2$ (0.0638 sq ins), in accordance with the need for applying the coating over a relatively larger area (greater x-coordinate dimension and y-coordinate dimension), so that a thin, ribbon-like coating is applied to the rotating body to promote fast drying-times, in order to prevent dripping of the liquid polyurethane from the body being coated therewith.

It is to be understood that the length of the interior passageway 50 of the nozzle 40 may vary depending on a number of factors, such as the type of pre-polymers used, the specific liquid elastomer applied, the size and type of body to be coated, and the like. The length of 50.8 mm (two inches) for the passageway 50 shown in the drawings and described above has been given by way of example only, and is not meant nor intended to be limiting. Moreover, the actual various cross-sectional shapes in the interior passageway 50 shown in the drawings and discussed hereinabove, where the cross-sectional area of each such shape is the same as another, are shown by way of example, and is not intended to exclude other shapes and cross-sectional areas, as long as the cross-sectional area of each such shape is the same as another such shape, in order to ensure equality of dwell-time of each hypothetical section of flowing liquid polyurethane therein, where the outlet-opening 52 is of such size and shape so as to ensure a spray or application of liquid elastomer coating, such as polyurethane, to a body that allows the drying of the liquid polyurethane on the body being coated before dripping occurs, which also ensures an even thickness to the applied coating, and which also prevents air-blistering. Owing to this constancy of cross-sectional area along the length of the interior passageway 50 after the venturi-flow inlet-section, the flow through the entire interior passageway is substantially laminar, having a Reynolds number of less than 2100.

With the nozzle 40 of the present invention, it is possible to coat bodies of smaller diameter as compared with the prior-art nozzles of Figs 1A and 2A. Whereas prior-art, rotational-casting-machine nozzles have been able to effectively coat only a cylindrical body down to a minimum diameter of about 127 mm (five inches) the nozzle 40 has been able to effectively coat a cylindrical body of about 50.8 mm (two inches) in diameter. In addition, the distance the outlet of the nozzle 40 of the invention from the surface of the body to be coated may be increased to as much as 25 mm., as compared to 10 mm. for prior-art devices, without causing air-bubbling. This means that the liquid-elastomer deposition rate onto the body to the coated may be increased from between 50%- 150% as compared with the prior-art nozzles of Figs. 1A and 2A.

It is, also, noted that the nozzle of the invention may be provided with one or more additional interior passageways identical to interior passageway 50 if increased liquid-elastomer deposition rates are desired, as, for example, when coating extra large and/or long bodies. In this modification, the plurality of interior passageways 50 would preferably be equally-spaced apart along the width of the main housing of the nozzle.

For the example given above, with the cross-sectional shapes and inch dimensions shown in the Figs. 4A-4C, the following algorithm accurately describes the interior passage 50. Applying the formula 1 inch = 25.4 mm can be used to derive mm dimensions.

"Algorithm"

The inlet and outlet cross-sections are both considered to be in x-y planes, separated by a distance dz in the z-axis, where each point on the inlet is matched up with a point on the outlet. Create a new cross-section profile using the following equations to transform each point of the inlet/outlet profile.

$$X_{new} = (X_{inlet} + X_{outlet}) / 2$$

$$Y_{new} = (Y_{inlet} + Y_{outlet}) / 2$$

Determine the cross-sectional area of the new profile. Then, to calculate all of the new cross-sections, use the following algorithm:

$$n = 8 \cdot (A_{new} / A_{inlet} - 1)$$

For each z in the range $\{Z_{inlet} ... Z_{outlet}\}$

$$t = (z - Z_{inlet}) / (Z_{outlet} - Z_{inlet})$$

If t is in the range {0...0.50}, then

$$p = 2 t^2$$

$$s = (-2 n 1)^4 + n t^2 + 1)^{-0.5}$$

If t is in the range {0.50... 1}, then

$$p = 1 - 2 (1 - t)^2$$

$$s = (-2 n (t - 1)^4 + n (t - 1)2 + 1)^{0.5}$$

For each (x, y) point in the inlet/outlet profiles

$$x = s [ (1 - p) x_{inlet} + p x_{outlet} ]$$

$$y = s \left[ (1 - p)\, y_{inlet} + p\, {}^{y}outlet \right]$$

Next (x, y) point
Next z

Software code listing for performing the above-detailed algorithm is as follows:

```
Sub CreateConstantAreaCrossSectionsFromPolylines()
' This sub will create cross-sections between two lightweight polylines
' (equal number of segments required) at different z-elevations. It uses
' a 2nd order polynomial cam equation to shift from one polyline to the other,
' along with a scaling factor in order to maintain a constant area cross-section.

On Error Resume Next
Dim objEnt1 As AcadEntity, objEnt2 As AcadEntity, objEnt3 As AcadEntity
Dim varPick As Variant
Dim varWCS As Variant
Dim dz As Double

dz = 1.46875 ' z distance of line segments
With ThisDrawing.Utility
        .GetEntity objEnt1, varPick, vbCr & "Pick the first polyline: "
        ' Check entity
If (objEnt1.ObjectName <> "AcDbPolyline") Or (objEnt1 Is Nothing) Then
                .Prompt "You did not pick a polyline."
Exit Sub
End If

.GetEntity objEnt2, varPick, vbCr & "Pick the second polyline: "
' Check entity
If (objEnt2.ObjectName <> "AcDbPolyline") Or (objEnt2 Is Nothing) Then
.Prompt "You did not pick a polyline."
Exit Sub
End If

' Check for equal number of segs
If UBound(objEnt1.Coordinates) <> UBound(objEnt2.Coordinates) Then
        .Prompt "Polylines do not have the same number of segments. The first had " &
Str$((UBound(objEnt1.Coordinates) + 1) / 2) & " and the second had " &
Str$((UBound(objEnt2.Coordinates) + 1) / 2) & "."
        Exit Sub
    End If

.GetEntity objEnt3, varPick, vbCr & "Pick the axis line: "
' Check entity
```

```
If (objEnt3.ObjectName <> "AcDbLine") Or (objEnt3 Is Nothing) Then
.Prompt "You did not pick a line."
        Exit Sub
    End If

        Dim plEnt1 As AcadLWPolyline, plEnt2 As AcadLWPolyline, plEnt3 As
AcadLWPolyline
        Dim lAxis As AcadLine

        Dim dblPts() As Double
        Set plEnt1 = objEnt1
        Set plEnt2 = objEnt2
        Set lAxis = objEnt3

        ' Make sure line is going in correct direction; if it's not, swap the endpts
        If DistXYZ(plEnt1.Coordinates(0), lAxis.StartPoint) >
DistXYZ(plEnt2.Coordinates(0), lAxis.StartPoint) Then
        Dim Tmp As Variant
        Tmp = lAxis.StartPoint


c:\acad\vba\nozzle.dvb

        lAxis.StartPoint = lAxis.EndPoint
        lAxis.EndPoint = Tmp
    End If

    'If plEnt2.Area <> plEnt1.Area Then
    ' ThisDrawing.Utility.GetPoint varPick, "Cross-sectional areas are not equal.
Select the scaling center:"
    ' plEnt2.ScaleEntity varPick, Sqr(plEnt1.Area / plEnt2.Area)
    'End If

z1 = plEnt1.Elevation
z2 = plEnt2.Elevation
ReDim dblPts(UBound(plEnt1.Coordinates))
Dim cir As AcadCircle, ptCtr(2) As Double
Dim n As Double, t As Double, s As Double, z As Double

' Create 50% plEnt1, 50% plEnt2 hybrid to get area
pidx = 0
For idx = 0 To UBound(plEnt1.Coordinates) Step 2
        x1 = plEnt1.Coordinates(idx)
        y1 = plEnt1.Coordinates(idx + 1)
        x2 = plEnt2.Coordinates(idx)
        y2 = plEnt2.Coordinates(idx + 1)
```

```
        dblPts(pidx) = (x1 + x2) / 2#
        dblPts(pidx + 1) = (y1 + y2) / 2#
        pidx = pidx + 2
    Next idx
    Set plEnt3 = ThisDrawing.ModelSpace.AddLightWeightPolyline(dblPts())
    plEnt3.Update
    n = 8 * (plEnt3.Area / plEnt1.Area - 1)
    plEnt3.Delete

    ReDim dblPts(1.5 * (1 + UBound(plEnt1.Coordinates)) - 1)

    If z2 < z1 Then dz = -dz
    For z = z1 To z2 Step dz 't = 0 To 1 Step dz / Abs(z2 - z1)
        pidx = 0
        = (z - z1) / (z2 - z1)
        If t <= 0.5 Then
        p = 2 * t ^ 2
        s = (-2 * n * t ^ 4 + n * t ^ 2 + 1) ^ -0.5
    Else
        p = 1 - 2 * (1 - t) ^ 2
        s = (-2 * n * (1 - t) ^ 4 + n * (1 - t) ^ 2 + 1) ^ -0.5
    End If
    For idx = 0 To UBound(plEnt1.Coordinates) Step 2
        x1 = plEnt1.Coordinates(idx)
        y1 = plEnt1.Coordinates(idx + 1)
        x2 = plEnt2.Coordinates(idx)
        y2 = plEnt2.Coordinates(idx + 1)
        dblPts(pidx) = s * (p * x2 + (1 - p) * x1) '2nd degree polynomial
        dblPts(pidx + 1) = s * (p * y2 + (1 - p) * y1) '2nd degree polynomial
        dblPts(pidx + 2) = t * z2 + (1 - t) * z1 '1st degree polynomial
        pidx = pidx + 3
    Next idx
    ' dblPts(pidx) = x2
    ' dblPts(pidx + 1) = y2


c:\acad\vba\nozzle.dvb

    ' dblPts(pidx + 2) = z2
    Draw3DPolyline dblPts
        SetPt ptCtr, 0, 0, z
    DrawCircle ptCtr, 0.005
    cir.Update
    Next z
End With
End Sub
```

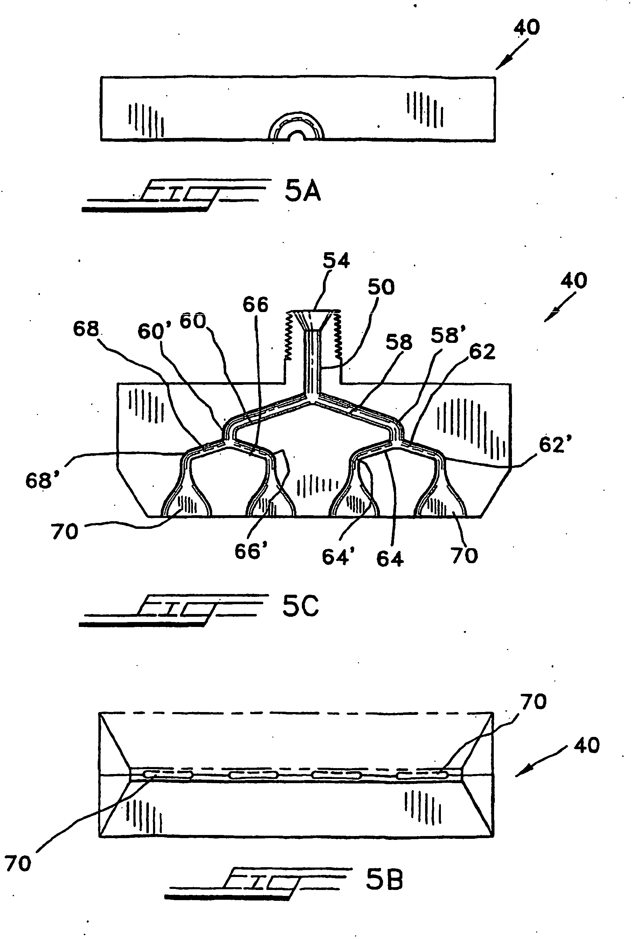

Referring now to the 5A-5C for now, there is shown a second embodiment of the invention, which Figs. 5A-5C show a half-section 40, it being understood that the other half-section of the nozzle of the invention is substantially identical. Each half-section 40 has a plurality of holes through which pass bolts for securing the two-halves together, with alignment pins cooperating with openings in the other-half section for initially aligning the half-sections together, in the manner described above with reference to the first embodiment. Each half-section 40 has an upper threaded portion, whereby after the two half-sections have been attached, there is provided an attachment section for securing the nozzle 40 to the mixing head of a rotational casting machine in the conventional manner, in which mixing head are mixed the prepolymers for forming the polyurethane used to coat a rotating body held by the rotational casting machine.

In accordance with the nozzle of the present invention, the nozzle 40 of the invention has a central, main inlet passageway 50 that includes inlet 54, which inlet is coupled with the exit or discharge orifice of the mixing head in the conventional manner. The central passageway branches off into two main branches, or branch passageways, 58, 60. Each main branch 58, 60 has an arcuate end-section 58', 60' to enhance laminar flow, whereby each main branch 58, 60, in turn, branches off into two sub-branches 62, 64, and 66, 68, respectively, each of which, in turn, leads into a discharge-passageway 70 via arcuate end-sections 62', 64', and 66', 68', respectively, also to enhance laminar flow. Each discharge-passageway 70 is formed somewhat similarly in concept to the passageway of the above-mentioned commonly-owned, copending applications, except for the differences explained hereinbelow.

In this embodiment of the invention, the main inlet passageway 50 has a circular cross section of a radius of 1.98 mm (.078 in), each of the main branches has a circular cross section of a radius of 1.6 mm (.063 in) and each of the sub-branch passageways has a circular cross section of a radius of 1.19 mm (.047. inch), it being understood that the dimensions are given only by way of example.

Each discharge-passageway 70 continually changes cross-sectional shape, as further described hereinbelow. The interior passageways of the nozzle 40 are so configured as to ensure that the flow of the liquid is substantially laminar therethrough. This laminar flow ensures the shortest possible dwell-time of any hypothetical element of liquid therein. Since the liquid polyurethane has been formed by exothermic reaction in the mixing head via the metered-in chemical reactants, and since the liquid has a short, reaction time once exiting the mixing head, any delay of passage through the nozzle would cause the liquid to solidify within the nozzle passageway, to cause the clogging thereof, as has been the problem with prior-art, rotational casting machine dispensing nozzles, as described hereinabove. By ensuring a substantial laminar flow throughout the length of the passageway of the nozzle of the invention, dwell time is reduced, and the concomitant reaction of the liquid and clogging of the passageway thereby is greatly reduced as compared to prior art rotational casting machine dispensing nozzles.

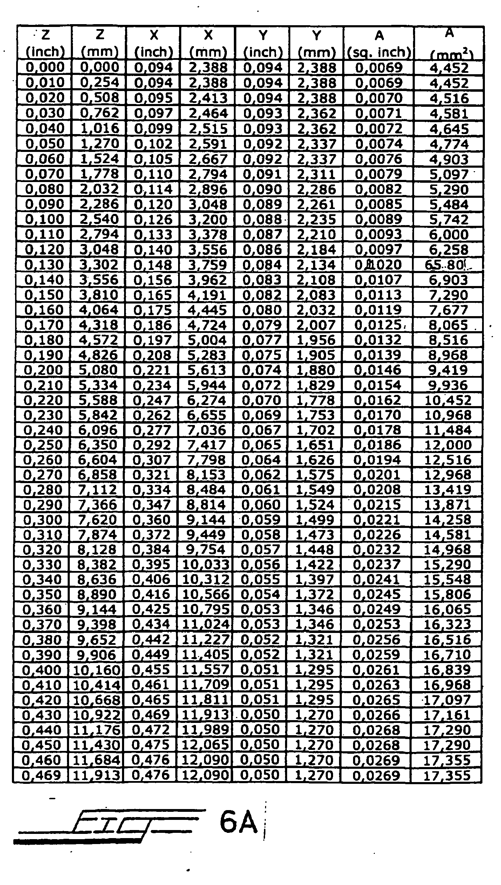

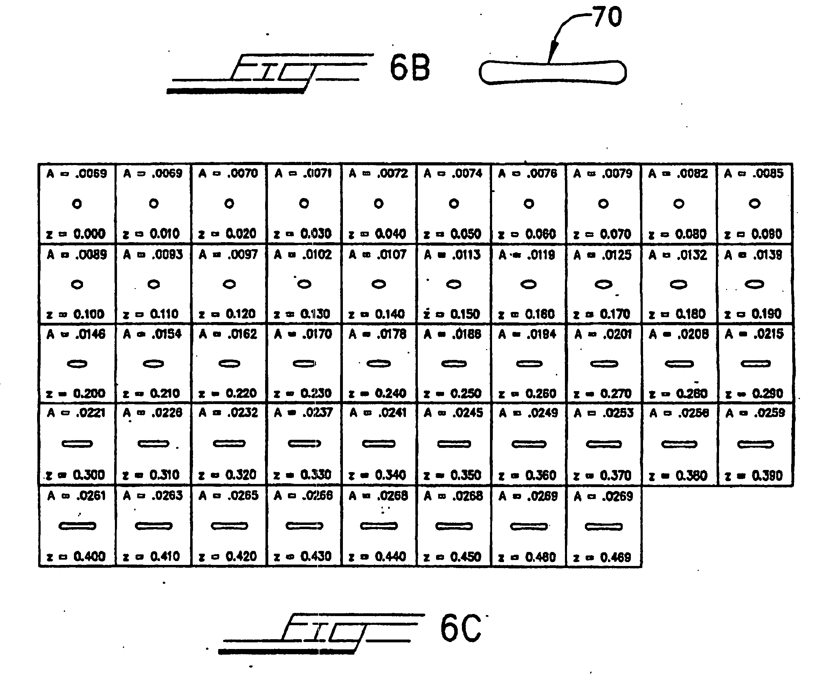

Referring now to Figs. 6A-6C, the exit opening or outlet of each passageway 70 is made relatively elongated in width, in the "x" coordinate direction, yet narrow in height, in the "y" coordinate direction, as depicted in Fig. 6B, to form an elongated, slit-like outlet. Referring to Fig. 6C, there is shown a series of transverse cross-sectional views along the longitudinal axis of the passageway 70, it being noted that value "A" indicated refers to the cross-sectional area in square inches of a respective cross section. The distance along the longitudinal axis from the inlet is defined as the "z" dimension in Figs. 6A in both mm and inches and in Fig 6C in inches only. It is noted that while the overall length of each discharge passageway 70 is, in this embodiment, 1.27 mm (.0500 inch), the cross-sectional shapes along the discharge passageway 70 in Fig. 6C are taken over an overall length of 11.91 mm (.469 inch), since the 0.79 mm (.031 inch) length before z = 0 provides a transition section to double the circular radius from 1.19 mm (.047) of a sub-branch passageway to the 2.39 mm (.094) of the inlet section of the discharge-passageway 70 at z = 0 in Fig. 6C.

Referring to Fig. 6A, there is shown the corresponding x, y and z dimensions for each transverse cross sections of Fig. 6C, with the outlet shown in Fig. 6B of the passageway 70 having a "z" value of 11.91 mm (.469 in), in this embodiment where the length of the entire passageway is 12.7 mm (.500 in), it also being understood that the length of the passageway 70 may vary depending upon type of liquid coating being dispensed, the sizes of the outlet and inlet, and other variables that would be clear to one of ordinary skill in the art.

In this second embodiment, the cross-sectional area along the internal passageway 70 is not constant. This is so because the outlet at z = 11.91 mm (.469) is too small or narrow to pass any particulate matter in the flowing stream, which particulate matter could cause clogging of the nozzle. The main purpose of the cross-sectional pattern shown in Figs. 6A-6C is to maintain even pressures across the nozzle cross-sections, so that, although the stream will flow more slowly as the cross-sectional area enlarges, all areas of the stream in any particular cross-section will, however, move at the same velocity, to thereby ensure laminar flow, whereby deposition of particulate, and the concomitant clogging associated therewith, is obviated. Since the transition from one cross section to another is kept to an extreme minimum, as evidenced by the minimal increase in cross-sectional area from one cross section to the next as indicated in Fig. 6C, turbulent flow at the boundary layer is for all intents and purposes is eliminated or reduced to an insignificant factor..

Referring again to Fig. 6C, the area of the transverse cross sections from z = 0 until z = 11.913 mm (0.469 in) increases from 4.452 mm$^2$ to 17.355 mm$^2$ (0.0069 sq ins to 0.0269 sq ins) at the outlet. As one progresses along the z-direction, the x-dimension increases while the y-dimension decreases, to form a continual narrowing of the height of the passageway and a continual increasing of the width thereof, until finally forming the elongated, flared-end, bell-shaped, or an oval-of-Cassini shape, outlet of Fig. 6B. Thus, while at z=0 and z =0.254 mm (0.010 in), the cross section is circular, subsequent cross sections tend to elongate until ever greater elliptical shapes, elongated slots, and oval-of-Cassini shapes are formed. Finally, at the outlet or exit at z =11.913 mm (0.469 in), the largest cross-sectional area of an oval-of-Cassini shape is formed, in order to apply the coating over a relatively larger area. The increase in each cross-section in both the "x" and "y" directions are as minimal as possible in order to ensure that the velocity of any hypothetical cross section of the flowing liquid remains the same in that hypothetical cross section, in order to ensure as close to laminar flow as possible, in order to prevent boundary-layer turbulent flow, which turbulent flow would tend to cause deposition of particulates and subsequent clogging of the passageway. Thus, for the example shown in Figs. 6A-6C, for the cross sections shown, there is not a greater increase in the "x" dimension from one cross section to an adjacent cross section of than 0.38 mm (0.015 in) which occurs between z = 5.842 mm (0.230 in) until z = 6.604 mm (0.260 in). The absolute difference in increase in the value of the "x" dimension gradually increases from z = 0.5080 mm (0.020 in) from a difference of 0.025 mm (0.001 in) to the above-mentioned maximum of 0.38 mm (0.015 in), with such difference going in stages from the above-mentioned. 0.025 mm (0.001 in) at z = 0.5080 mm (0.020in), to a difference of 0.0510 mm (0.002 in), between z = 0.508 mm (0.020 in) and z = 1.016 mm (0.040 in) and then increases to. 0.076 mm (0.003 in) from z =1.016 mm (0.040 in) to z =1.524 mm (0.060 in), temporary increases to 0.127 mm (0.005 in) between z = 1.524 mm (0.060 in) and z =1.778 mm (0.070 in), and then decreases to 1.02 mm (0.004 in) from z = 1.778 mm (0.070 in) and z = 2.032 mm (0.80 in), and then increases to 0.15 mm (0.006 in) between z = 2.032 mm (0.080 in) and z = 2.540 mm (0.100 in), and then increases to 0.18 mm (0.007 in) from z = 2.54 mm (0.100 in) to z = 3.068 mm (0.120 in), increases to 0.20 mm (0.008 in) from z = 3.048 mm (0.120 in) to z = 3.556 mm (0.140 in), increases to 0.23 mm (0.009 in) from z = 3.556 mm (0.140 in) to z = 3.810 mm (0.150 in), increases to 0.254 mm (0.010 in) from z = 3.810 mm (0.150 in) to z = 4.064 mm (0.160 in), increases to 0.28 mm (0.011 in) from z = 4.064 mm (0.160 in) until z = 4.826 mm (0.190 in), increases to 0.33 mm (0. 013 in) from z = 4.826 mm (0.190 in) until z = 5.588 mm (0.220 in), increases to the above mentioned maximum of 0.38 mm (0.015 in) from z = 4.826 mm (0.190 in) until z = 6.604 mm (0.260 in), and then starts to decrease until the outlet, such that the difference is 0.36 mm (0.014 in) at z = 6.604 mm (0.260 in) until z = 6.858 (0.270 in), and then decreases to 0.33 mm (0.013 in) between z = 6.858 mm (0.270 in) until z = 7.620 mm (0. 300 in), decreases to 0.31 mm (0.012 in) from z = 7.620 mm (0.300 in) until 8.128 mm (0.320 in), decreases again to 2.79 mm (0.011 in) at z = 8.128 mm (0.320 in) until z = 8.636 mm (0.340 in), decreases to 0.25 mm (0. 010 in) from z = 8.636 mm (0.340 in) to z = 8.890 mm (0.350 in), decreases to 0.23 mm (0.009 in) from z = 8.890 mm (0.350 in) to z = 9.398 mm (0.370 in), and then decreases to 0.23 mm (0.0089 in) from z = 9.398 mm (0.370 in) until z = 9.652 mm (0.380 in), decreases to 0.18 mm (0.007 in) from z = 9.652 mm (0.380 in) to z = 9.906 mm (0.390 in), decreases to 0.652 mm (0.006 in) from z = 9.906 mm (0.390 in) until z = 10.414 mm (0.410 in), decreases to 0.10 mm (0.004 in) from z = 9.906 mm (0.390 in) until z =10,922 mm (0.430 in), decreases to 0.076 mm (0.003 in) from z = 10.922 mm (0.430 in) until z = 11.430 mm (0.450 in), and then drops to 0.025 mm (0.001 in) from z = 11.430 mm (0.450 in) to z =11.684 mm (0.460 in), with no change from z =11.430 mm (0.450 in) to the actual outlet at z = 11.913 mm (0.469 in). For the "y" dimension, this value continually diminishes from one "z"-value cross section to the next such that the difference in the "y" dimension from one "z"-value cross section to the next is only 0.025 mm (0.001 ins) or 0.051 mm (0.002 inch) for most sections, while only a few adjacent "z" -value cross sections have the same "y" value. These gradual and minimal changes in the "x" and "y" dimensions provide a passageway 50 that has the difference in cross-sectional area values between adjacent cross sections of the main passageway section gradually increasing to a maximum at an approximate medial portion of the main passageway section between the inlet and outlet opening, which difference in cross-sectional area values then gradually decreases from this approximate medial portion of the main passageway section until the outlet opening. These gradual and minimal changes in the "x" and "y" dimensions, and in the difference in cross-sectional area values between adjacent cross sections in the "z" direction toward the outlet opening, ensures the above-described constant velocity, the laminar flow, and substantial negation of boundary-layer turbulent flow.

It is to be understood that the length of the passageway 70 and the number thereof may vary depending on a number of factors, such as the type of pre-polymers used, the specific liquid elastomer applied, the size and type of body to be coated, and the like. The length of the passageway 70 described above has been given by way of example only, and is not meant nor intended to be limiting. Moreover, the actual various cross-sectional shapes in the interior passageway 70 shown in the drawings and discussed hereinabove, are shown by way of example, and is not intended to exclude other shapes and cross-sectional areas. Similarly, it is to be understood that the radius of each of the main passageway 50, the branches 58, 60 and the sub-branches 62, 64, 66, and 68 have been only by way of example, and are not intended to be limiting. Also, the number of branches 58 and 60, and sub-branches 62, 64, 66, 68 used, may be different from that shown in the drawing and discussed above. For example more than two branch-passageways 58, 60 may be used, with concomitant greater number of sub-branches employed. Moreover, for certain end-uses, capillary passageways connecting the sub-branches 62, 64, 66, 68 to discharge-passageways 70 may be employed.

The dispensing nozzle described hereinabove may have applications and uses in machines other than rotational casting apparatuses, and may also have application and use in the dispensing of other fluids, whether liquid or gas, and not just elastomers. Moreover, in some of these other applications and uses, the discharge-passageway 70 may be used as the sole and only dispensing passageway, it being understood that the length thereof and the cross-sectional areas thereof will vary depending upon end-use.

For the example given above, with the cross-sectional shapes and inch dimensions shown in the Figs. 6A-6C, the following algorithm describes the interior passage 70. SI unit dimensions can be derived applying the equation 1 inch = 25.4 mm.

"Algorithm"

The inlet and outlet cross-sections are both considered to be in x-y planes, separated by a distance dz in the z-axis, where each point on the inlet is matched up with a point on the outlet.

## Pseudocode

For each $z$ in the range $\{z_{inlet}...z_{outlet}\}$

$$t = (z - z_{inlet}) / (z_{outlet} - z_{inlet})$$

If $t$ is in the range $\{0...0.5\}$, then

$$p = t^2$$

If $t$ is in the range $\{0.5...1.0\}$, then

$$p = 1 - 2 \cdot (1 - t)^2$$

For each $(x, y)$ point in the inlet/outlet profiles,

$$x = (1 - p) \cdot x_{inlet} + p \cdot x_{outlet}$$

$$y = (1 - p) \cdot y_{inlet} + p \cdot y_{outlet}$$

Next $(x, y)$ point

Next $z$

Visual Basic for Applications - AutoCAD 2000i Code

```
Public Function GetInterpolatedLWPolyline(lwp1 As AcadLWPolyline, lwp2 As

AcadLWPolyline, t As Double) As AcadLWPolyline

    Dim p As Double, s As Double
```

```
If t <= 0.5 Then

    p = 2 * t ^ 2

Else

    p = 1 - 2 * (1 - t) ^ 2

End If

Dim dblPts() As Double

ReDim dblPts(UBound(lwp1.Coordinates))

Dim idx As Integer

For idx = 0 To UBound(lwp1.Coordinates) Step 2

    x1 = lwp1.Coordinates(idx)

    y1 = lwp1.Coordinates(idx + 1)

    x2 = lwp2.Coordinates(idx)

    y2 = lwp2.Coordinates(idx + 1)

    dblPts(idx) = p * x2 + (1 - p) * x1

    dblPts(idx + 1) = p * y2 + (1 - p) * y1

Next idx

Set GetInterpolatedLWPolyline =

ThisDrawing.ModelSpace.AddLightWeightPolyline(dblPts)

End Function
```

Copyright Kastalon, Inc. 2004

## Claims

1. A dispensing nozzle for dispensing a liquid elastomer from a mixing head onto a body to be coated in a rotational casting apparatus, the nozzle comprising:

   an inlet (54) to receive liquid elastomer from the mixing head;
   interior flow passageway means (50) through which fluid flows from the inlet (54);
   said interior flow passageway means (50) comprising at least one discharge-passageway;
   said at least one discharge-passageway defining a longitudinal axis along the length thereof defined as the "z" axis, and having a main passageway section and an outlet-opening section; and
   said main passageway section comprising a series of cross-sectional shapes equally spaced in the direction of the "z" axis;

said outlet-opening section comprising an outlet opening having a substantially elongated-like shape;

each of the series of cross-sectional shapes being defined by a width "x" and a height "y" ; the "x" dimension of at least most of said series of cross-sectional shapes increasing in value along the "z" direction toward said outlet opening, and said "y" dimension of at least most of said series of cross-sectional shapes decreasing in value along the "z" direction toward said outlet opening;

**characterized in that** the difference in the "x" dimension between adjacent said cross sections initially gradually increases for at least most of the cross sections until reaching a maximum at an approximately medially located portion of said discharge passageway between the inlet of said of discharge-passageway and said outlet opening, and decreases thereafter from said approximately medially located portion until at least near said outlet opening.

2. A dispensing nozzle for dispensing a liquid elastomer from a mixing head onto a body to be coated in a rotational casting apparatus, the nozzle comprising:

an inlet (54) to receive liquid elastomer from the mixing head;

interior flow passageway means (50, 60, 70) through which fluid flows from the inlet (54);

said interior flow passageway means (50, 60, 70) comprising at least one discharge-passageway (70);

said at least one discharge-passageway (70) defining a longitudinal axis along the length thereof defined as the "z" axis, and having a main passageway section and an outlet-opening section; and

said main passageway section comprising a series of cross-sectional shapes equally spaced in the direction of the "z" axis;

said series of cross-sectional shapes increasing in cross-sectional area in a direction toward said outlet-opening section;

said outlet-opening section comprising an outlet opening having a substantially elongated-like shape;

each of said series of cross-sectional shapes being defined by a width "x" and a height "y" ; the "x" dimension of at least most of said series of cross-sectional shapes increasing in value along the "z" direction toward said outlet opening, and said "y" dimension of at least most of said series of cross-sectional shapes decreasing in value along the "z" direction toward said outlet opening;

**characterized in that** the difference in cross-sectional area values between adjacent said cross sections of said main passageway section gradually increases to a maximum at a portion of said main passageway section between the inlet thereof and said outlet opening, and then gradually decreases in value from said portion of said main passageway section until said outlet opening.

3. The dispensing nozzle according to claim 1, wherein for a spacing of 0.254 mm (0.01 inches) between cross sections to the "z" dimension the difference in the "x" dimension between adjacent said cross sections of at least most of said series of cross-sectional shapes is in the approximate range of between 0.0254 mm (0.001 inch) and 0.381 mm (0.015 inch).

4. The dispensing nozzle according to claim 3, wherein for the spacing of 0.254 mm (0.01 inches) between cross sections in the "z" dimension the difference in the "x" dimension between adjacent said cross sections initially gradually increases for at least most of the cross sections until reaching said maximum of 0.381 mm (0.015 inch), and then decreases for at least most of the cross-sections until reaching said minimum of 0.0254 mm (0.001 inch).

5. The dispensing nozzle according to claim 1, wherein for a spacing of 0.254 mm (0.01 inches) between cross sections in the "z" dimension the difference in the "y" dimension between adjacent said cross sections of at least most of said series of cross-sectional shapes is in the approximate range of between 0-0254 mm (0.001 inch) and 0.0508 mm (0.002 inch).

6. The dispensing nozzle according to claim 2, wherein the cross-sectional area between adjacent said cross sections of said main passageway section increases in value in the approximate range of between 0.645 mm$^2$ (0.001 square inches) and 5.161 mm$^2$ (0.008 square inches).

7. The nozzle according to claim 2, wherein the interior flow passageway means comprises a first inlet passageway (50) leading from the inlet (54) and a first outlet, a plurality of branch passageways (60, 58) each having a second inlet connected to said first outlet of said first inlet passageway (50) and a second outlet (60', 58');

said interior flow passageway (50) further comprising a plurality of said discharge passageways (70), each said discharge passageway of said plurality of discharge passageways (70) having a third inlet (62', 64', 66', 68') in fluid communication with a said second outlet (60', 58') of a respective said branch passageway (60, 58).

8. The dispensing nozzle according to claim 7, wherein said interior flow passageway means further comprises a plurality of sub-branch passageways (62, 64, 66, 68) each having a fourth inlet connected to a said second outlet (60', 58') of a respective said branch passageway (60, 58), and a fourth outlet connected to a said third inlet (62', 64', 66', 68') of a respective one of said discharge passageways (70), each said sub-branch passageway (62, 64, 66, 68) providing said fluid communication between a said third inlet (62', 64', 66', 68') of a respective said discharge passageway (70) and a said second outlet (60' 58') of a respective said branch passageway (60, 58).

9. The dispensing nozzle according to any preceding claim, wherein said plurality of cross sectional shapes comprises a first series of elliptical cross-sectional shapes and a second series of elongated-like cross-sectional shapes that continually transform in a direction along said longitudinal axis into said substantially elongated-like shape of said outlet opening.

10. The dispensing nozzle according to any of claims 1-8, wherein, along said "z" direction, said plurality of cross-sectional shapes comprises a first series of circular cross-sectional shapes, a second series of substantially elliptical cross-sectional shapes, and a third series of elongated like cross-sectional shapes, that continually transform in a direction along said "z" direction into said substantially elongated-like shape of said outlet opening.

11. The dispensing nozzle according to claim 10, wherein said third series of said plurality of cross-sectional shapes at least partially comprise a plurality of substantially oval-of-Cassini- like cross-sectional shapes.

**Patentansprüche**

1. Austragdüse zum Ausgeben eines flüssigen Elastomers aus einem Mischkopf auf einen in einer Rotationsgießvorrichtung zu beschichtenden Körper, die aufweist:

einen Zulauf (54) zur Aufnahme von flüssigem Elastomer aus dem Mischkopf;
eine interne Kanalanordnung (50), durch die Fluid vom Zulauf (54) her fließt;
wobei die interne Kanalanordnung (50) mindestens einen Austragkanal aufweist,
der mindestens eine Austragkanal eine als "z"-Achse definierte Längsachse aufspannt, die entlang seiner Längsausdehnung verläuft, und einen Hauptkanal- und einen Auslassöffnungsabschnitt aufweist,
der Hauptkanalabschnitt eine Folge von in Richtung der "z"-Achse gleichbeabstandeten Querschnittsformen aufweist und
der Auslassöffnungsabschnitt eine in der Gestalt im Wesentlichen längliche Auslassöffnung aufweist;
wobei die Querschnittsformen jeweils eine Breite "x" und eine Höhe "y" aufweisen, von denen die "x"-Dimension von mindestens den meisten der Querschnittsformen in "z"-Richtung zur Auslassöffnung hin in der Größe zunimmt und die "y"-Abmessung mindestens der meisten der Querschnittsformen in "z"-Richtung zur Auslassöffnung hin in der Größe abnimmt;
**dadurch gekennzeichnet, dass** bei den meisten Querschnitten die Differenz der "x"-Abmessungen zwischen nebeneinander liegenden Querschnitten bis zum Erreichen eines Maximums in einem angenähert mittig liegenden Bereich des Austragkanals zwischen dem Zulauf des Austragkanals und der Auslassöffnung liegenden Bereich anfänglich allmählich zunimmt und danach von dem angenähert mittigen Bereich bis mindestens nahe der Auslassöffnung abnimmt.

2. Austragdüse zum Ausgeben eines flüssigen Elastomers aus einem Mischkopf auf einen in einer Rotationsgießvorrichtung zu beschichtenden Körper, die aufweist:

einen Zulauf (54) zur Aufnahme von flüssigem Elastomer aus dem Mischkopf;
eine interne Kanalanordnung (50), durch die Fluid vom Zulauf (54) her fließt;
wobei die interne Kanalanordnung (50) mindestens einen Austragkanal aufweist,
der mindestens eine Austragkanal eine als "z"-Achse definierte Längsachse aufspannt, die entlang seiner Längsausdehnung verläuft, und einen Hauptkanal- und einen Auslassöffnungsabschnitt aufweist,
der Hauptkanalabschnitt eine Folge von in Richtung der "z"-Achse gleichbeabstandeten Querschnittsformen aufweist,
und die Folge von Querschnittsformen zum Auslassöffnungsabschnitt hin in der Querschnittsfläche zunehmen,
der Auslassöffnungsabschnitt eine in der Gestalt im Wesentlichen längliche Auslassöffnung aufweist; und
wobei die Querschnittsformen jeweils eine Breite "x" und eine Höhe "y" aufweisen, von denen die "x"-Dimension von mindestens den meisten der Querschnittsformen in "z"-Richtung zur Auslassöffnung hin in der Größe zunimmt und die "y"-Abmessung mindestens der meisten der Querschnittsformen in "z"-Richtung zur Auslassöffnung hin in der Größe abnimmt;

**dadurch gekennzeichnet, dass** bei den meisten Querschnitten die Differenz der "x"-Abmessungen zwischen nebeneinander liegenden Querschnitten bis zum Erreichen eines Maximums in einem angenähert mittig liegenden Bereich des Austragkanals zwischen dem Zulauf des Austragkanals und der Auslassöffnung liegenden Bereich anfänglich allmählich zunimmt und danach von dem angenähert mittigen Bereich bis mindestens nahe der Auslassöffnung allmählich abnimmt.

3. Austragdüse nach Anspruch 1, bei der für einen Abstand von 0,254 mm (0.01 in.) zwischen Querschnitten in der "z"-Abmessung die Differenz in "x"-Richtung zwischen aneinandergrenzenden Querschnitten mindestens der meisten aus der Folge von Querschnittsformen angenähert im Bereich zwischen 0.0254 mm (0.001 in.) und 0,381 mm (0.015 in.) liegt.

4. Austragdüse nach Anspruch 1, bei der für einen Abstand von 0,254 mm (0.01 in.) zwischen Querschnitten in der "z"-Abmessung die Differenz in der "x"-Abmessung zwischen aneinandergrenzenden Querschnitten für mindestens die meisten der Querschnitte zu einem Maximum von 0,381 mm (0.015 in.) zunimmt und dann für mindestens die meisten der Querschnitt bis zum Erreichen des Minimums von 0,0254 mm (0.0001 in.) hin abnimmt.

5. Austragdüse nach Anspruch 1, bei der für einen Abstand von 0,254 mm (0.01 in.) zwischen Querschnitten in der "z"-Dimension die Differenz in "y"-Richtung zwischen aneinandergrenzenden Querschnitten mindestens der meisten der Folge von Querschnittsformen angenähert im Bereich zwischen 0,0254 mm (0.0001 in.) und 0,0508 mm (0.002 in.) liegt.

6. Austragdüse nach Anspruch 2, bei der die Querschnittsfläche zwischen aneinandergrenzenden Querschnitten des Hauptkanalabschnitts im angenäherten Bereich zwischen 0,645 mm$^2$ (0.001 sq.in.) und 5,161 mm$^2$ (0.008 sq.in.) zunimmt.

7. Düse nach Anspruch 2, bei der die interne Kanalanordnung einen ersten Einlasskanal (50), der vom Einlass (54) zu einem ersten Auslass führt, und eine Vielzahl von Abzweigkanälen (60, 58) aufweist, die jeweils mit einem zweiten Einlass mit dem ersten Auslass des ersten Einlasskanals (50) verbunden sind und einen zweiten Auslass (60', 58') aufweisen;

wobei der innere Kanal (50) weiterhin eine Vielzahl von Austragkanälen (70) mit jeweils einem dritten Einlass (62', 64', 66', 68') aufweist, der mit dem zweiten Auslass (60', 58') eines zugehörigen Abzweigkanals (60, 58) fluidisch verbunden ist.

8. Austragdüse nach Anspruch 7, bei der die interne Kanalanordnung eine Vielzahl von Unter-Abzweigkanälen (62, 64, 66, 68) aufweist, die jeweils mit einem vierten Einlass mit einem zweiten Auslass (60', 58') eines zugehörigen Abzweigkanals (60, 58) und mit einem vierten Auslass mit dem dritten Einlass (62', 64', 66', 68') eines zugehörigen der Austragkanäle (70) verbunden sind, wobei jeder Unter-Abzweigkanal eine Strömungsverbindung zwischen einem dritten Einlass (62', 64', 66', 68') eines zugehörigen Austragkanals (70) und einem zweiten Auslass (60', 58') eines zugehörigen Abzweigkanals (60, 58) herstellt.

9. Austragdüse nach einem der vorgehenden Ansprüche, bei der die Vielzahl von Querschnittsformen eine erste Folge von elliptischen und eine zweite Folge von länglichen Querschnittsformen aufweisen, die entlang der Längsachse schrittweise in die im Wesentlichen längliche Gestalt der Auslassöffnung übergehen.

10. Austragdüse nach einem der Ansprüche 1 bis 8, bei der die Qurschnittsformen in "z"-Richtung eine erste Folge von kreisförmigen, eine zweite Folge von im Wesentlichen elliptischen und eine dritte Folge von länglichen Querschnitten aufweisen, die in "z"-Richtung schrittweise in die im Wesentlichen längliche Gestalt der Auslassöffnung übergehen.

11. Austragdüse nach Anspruch 10, bei der die dritte Folge der Vielzahl von Querschnittsformen mindestens teilweise eine Vielzahl von Querschnitten aufweist, die im Wesentlichen als Cassini-Oval ausgeführt sind.

**Revendications**

1. Buse de distribution pour distribuer un élastomère liquide à partir d'une tête de mélange sur un corps à revêtir dans un appareil de coulée rotative, la buse comprenant :

une entrée (54) pour recevoir l'élastomère liquide à partir de la tête de mélange ;

des moyens de passage d'écoulement intérieur (50) à travers lesquels du fluide s'écoule à partir de l'entrée (54) ;

lesdits moyens de passage d'écoulement intérieur (50) comprenant au moins un passage d'évacuation ;

ledit au moins un passage d'évacuation définissant un axe longitudinal le long de la longueur de celui-ci défini comme l'axe "z" , et ayant une section de passage principale et une section d'ouverture de sortie ; et

ladite section de passage principale comprenant une série de formes de section transversale équidistantes dans la direction de l'axe "z" ;

ladite section d'ouverture de sortie comprenant une ouverture de sortie ayant une forme sensiblement allongée ;

chacune parmi la série de formes de section transversale étant définie par une largeur "x" et une hauteur "y" ;

la dimension "x" d'au moins la majorité de ladite série de formes de section transversale augmentant en valeur le long de la direction "z" vers ladite ouverture de sortie, et ladite dimension "y" d'au moins la majorité de ladite série de formes de section transversale diminuant en valeur le long de la direction "z" vers ladite ouverture de sortie ;

**caractérisée en ce que** la différence dans la dimension "x" entre lesdites sections transversales adjacentes augmente initialement graduellement pour au moins la majorité des sections transversales jusqu'à atteindre un maximum à une partie située approximativement au milieu dudit passage d'évacuation entre l'entrée dudit passage d'évacuation et ladite ouverture de sortie, et diminue ensuite à partir de ladite partie située approximativement au milieu jusqu'au moins à proximité de ladite ouverte de sortie.

2. Buse de distribution pour distribuer un élastomère liquide à partir d'une tête de mélange sur un corps à revêtir dans un appareil de coulée rotative, la buse comprenant :

une entrée (54) pour recevoir l'élastomère liquide à partir de la tête de mélange ;

des moyens de passage d'écoulement intérieur (50, 60, 70) à travers lesquels du fluide s'écoule à partir de l'entrée (54) ;

lesdits moyens de passage d'écoulement intérieur (50, 60, 70) comprenant au moins un passage d'évacuation (70) ;

ledit au moins un passage d'évacuation (70) définissant un axe longitudinal le long de la longueur de celui-ci défini comme l'axe "z", et ayant une section de passage principale et une section d'ouverture de sortie ; et

ladite section de passage principale comprenant une série de formes de section transversale équidistantes dans la direction de l'axe "z" ;

ladite série de formes de section transversale augmentant en aire de section transversale dans une direction vers ladite section d'ouverture de sortie ;

ladite section d'ouverture de sortie comprenant une ouverture de sortie ayant une forme sensiblement allongée ;

chacune parmi ladite série de formes de section transversale étant définie par une largeur "x" et une hauteur "y" ; la dimension "x" d'au moins la majorité de ladite série de formes de section transversale augmentant en valeur le long de la direction "z" vers ladite ouverture de sortie, et ladite dimension "y" d'au moins la majorité de ladite série de formes de section transversale diminuant en valeur le long de la direction "z" vers ladite ouverture de sortie ;

**caractérisée en ce que** la différence dans des valeurs d'aire de section transversale entre lesdites sections transversales adjacentes de ladite section de passage principale augmente graduellement jusqu'à un maximum à une partie de ladite section de passage principale entre l'entrée de celle-ci et ladite ouverture de sortie, et diminue ensuite graduellement en valeur à partir de ladite partie de ladite section de passage principale jusqu'à ladite ouverte de sortie.

3. Buse de distribution selon la revendication 1, dans laquelle pour un espacement de 0,254 mm (0,01 pouce) entre des sections transversales jusqu'à la dimension "z", la différence dans la dimension "x" entre lesdites sections transversales adjacentes d'au moins la majorité de ladite série de formes de section transversale est dans l'intervalle approximatif entre 0,0254 mm (0,001 pouce) et 0,381 mm (0,015 pouce).

4. Buse de distribution selon la revendication 3, dans laquelle pour l'espacement de 0,254 mm (0,01 pouce) entre des sections transversales dans la dimension "z", la différence dans la dimension "x" entre lesdites sections transversales adjacentes augmente initialement graduellement pour au moins la majorité des sections transversales jusqu'à atteindre ledit maximum de 0,381 mm (0,015 pouce), et diminue ensuite pour au moins la majorité des sections transversales jusqu'à atteindre ledit minimum de 0,0254 mm (0,001 pouce) .

5. Buse de distribution selon la revendication 1, dans laquelle pour un espacement de 0,254 mm (0,01 pouce) entre des sections transversales dans la dimension "z", la différence dans la dimension "y" entre lesdites sections transversales adjacentes pour au moins la majorité de ladite série de formes de section transversale est dans l'intervalle approximatif entre 0,0254 mm (0,001 pouce) et 0,0508 mm (0,002 pouce).

6. Buse de distribution selon la revendication 2, dans laquelle l'aire de section transversale entre lesdites sections transversales adjacentes de ladite section de passage principale augmente en valeur dans l'intervalle approximatif entre 0,645 mm$^2$ (0,001 pouce carré) et 5,161 mm$^2$ (0,008 pouce carré).

7. Buse selon la revendication 2, dans laquelle les moyens de passage d'écoulement intérieur comprennent un premier passage d'entrée (50) partant de l'entrée (54) et une première sortie, une pluralité de passages d'embranchement (60, 58) ayant chacun une deuxième entrée reliée à ladite première sortie dudit premier passage d'entrée (50) et une deuxième sortie (60', 58') ;
ledit passage d'écoulement intérieur (50) comprend en outre une pluralité desdits passages d'évacuation (70), chaque dit passage d'évacuation de ladite pluralité de passages d'évacuation (70) ayant une troisième entrée (62', 64', 66', 68') en communication fluidique avec une dite deuxième sortie (60', 58') d'un dit passage d'embranchement respectif (60, 58).

8. Buse de distribution selon la revendication 7, dans laquelle lesdits moyens de passage d'écoulement intérieur comprennent en outre une pluralité de passages d'embranchement secondaire (62, 64, 66, 68) ayant chacun une quatrième entrée reliée à une dite seconde sortie (60', 58') d'un dit passage d'embranchement respectif (60, 58), et une quatrième sortie reliée à une dite troisième entrée (62', 64', 66', 68') d'un passage respectif parmi lesdits passages d'évacuation (70), chaque dit passage d'embranchement secondaire (62, 64, 66, 68) assurant ladite communication fluidique entre ladite troisième entrée (62', 64', 66', 68') d'un dit passage d'évacuation respectif (70) et une dite deuxième sortie (60', 58') d'un dit passage d'embranchement respectif (60, 58).

9. Buse de distribution selon l'une quelconque des revendications précédentes, dans laquelle ladite pluralité de formes de section transversale comprend une première série de formes de section transversale elliptique et une deuxième série de formes de section transversale allongée qui se transforment continuellement dans une direction le long dudit axe longitudinal en ladite forme sensiblement allongée de ladite ouverture de sortie.

10. Buse de distribution selon l'une quelconque des revendications 1 à 8, dans laquelle, le long de ladite direction "z", ladite pluralité de formes de section transversale comprend une première série de formes de section transversale circulaire, une deuxième série de formes de section transversale sensiblement elliptique, et une troisième série de formes de section transversale allongée, qui se transforment continuellement dans une direction le long de ladite direction "z" en ladite forme sensiblement allongée de ladite ouverture de sortie.

11. Buse de distribution selon la revendication 10, dans laquelle ladite troisième série de ladite pluralité de formes de section transversale comprend au moins partiellement une pluralité de formes de section transversale sensiblement analogue à un ovale de Cassini.

FIG 1A

FIG 1B

FIG. 2A

FIG. 2B

EP 1 732 702 B1

FIG. 3C
FIG. 3D
FIG. 3E
FIG. 3F
FIG. 3B
FIG. 3G
FIG. 3A

22

EP 1 732 702 B1

FIG. 4B

**54**

| A = .1104 | A = .0791 | A = .0532 | A = .0376 | A = .0299 | A = .0276 | A = .0276 | A = .0276 | A = .0276 | A = .0276 |
|---|---|---|---|---|---|---|---|---|---|
| ◯ | ◯ | ◯ | ◯ | ◯ | ◯ | ◯ | ◯ | ◯ | ◯ |
| z = 0.000 | z = 0.050 | z = 0.100 | z = 0.150 | z = 0.200 | z = 0.250 | z = 0.300 | z = 0.350 | z = 0.400 | 0.450 |
| A = .0276 | A = .0276 | A = .0276 | A = .0276 | A = .0276 | A = .0276 | A = .0276 | A = .0276 | A = .0276 | A = .0276 |
| ◯ | ◯ | ◯ | ◯ | ◯ | ◯ | ◯ | ◯ | ◯ | ◯ |
| z = 0.500 | z = 0.550 | z = 0.600 | z = 0.650 | z = 0.700 | z = 0.750 | z = 0.800 | z = 0.850 | z = 0.900 | 0.950 |
| A = .0276 | A = .0276 | A = .0276 | A = .0276 | A = .0276 | A = .0276 | A = .0276 | A = .0276 | A = .0276 | A = .0276 |
| ⬭ | ⬭ | ⬭ | ⬭ | ⬭ | ⬭ | ⬭ | ⬭ | ⬭ | ⬭ |
| z = 1.000 | z = 1.050 | z = 1.100 | z = 1.150 | z = 1.200 | z = 1.250 | z = 1.300 | z = 1.350 | z = 1.400 | 1.450 |
| A = .0276 | A = .0276 | A = .0276 | A = .0276 | A = .0276 | A = .0276 | A = .0276 | A = .0276 | A = .0276 | A = .0276 |
| ⬭ | ⬭ | ⬭ | ⬭ | ⬭ | ⬭ | ⬭ | ⬭ | ⬭ | ⬭ |
| z = 1.500 | z = 1.550 | z = 1.600 | z = 1.650 | z = 1.700 | z = 1.750 | z = 1.800 | z = 1.850 | z = 1.900 | 1.950 |
| A = .0276 | A = .0638 | | | | | | | | |
| ⬭ | ⬭ | | | | | | | | |
| z = 1.969 | z = 2.000 | | | | | | | | |

**52**

FIG. 4A

| Z (inch) | Z (mm) | X (inch) | X (mm) | Y (inch) | Y (mm) | A (sq. inch) | A (mm²) |
|---|---|---|---|---|---|---|---|
| 0,000 | 0,000 | 0,375 | 9,525 | 0,375 | 9,525 | 0,1104 | 71,226 |
| 0,050 | 1,270 | 0,317 | 8,052 | 0,317 | 8,052 | 0,0791 | 51,032 |
| 0,100 | 2,540 | 0,260 | 6,604 | 0,260 | 6,604 | 0,0532 | 34,323 |
| 0,150 | 3,810 | 0,219 | 5,563 | 0,219 | 5,563 | 0,0376 | 24,258 |
| 0,200 | 5,080 | 0,195 | 4,953 | 0,195 | 4,953 | 0,0299 | 19,290 |
| 0,250 | 6,350 | 0,188 | 4,775 | 0,188 | 4,775 | 0,0276 | 17,806 |
| 0,300 | 7,620 | 0,188 | 4,775 | 0,187 | 4,750 | 0,0276 | 17,806 |
| 0,350 | 8,890 | 0,189 | 4,801 | 0,186 | 4,724 | 0,0276 | 17,806 |
| 0,400 | 10,160 | 0,191 | 4,851 | 0,185 | 4,699 | 0,0276 | 17,806 |
| 0,450 | 11,430 | 0,194 | 4,928 | 0,182 | 4,623 | 0,0276 | 17,806 |
| 0,500 | 12,700 | 0,198 | 5,029 | 0,179 | 4,547 | 0,0276 | 17,806 |
| 0,550 | 13,970 | 0,202 | 5,131 | 0,176 | 4,470 | 0,0276 | 17,806 |
| 0,600 | 15,240 | 0,208 | 5,283 | 0,172 | 4,369 | 0,0276 | 17,806 |
| 0,650 | 16,510 | 0,204 | 5,182 | 0,168 | 4,267 | 0,0276 | 17,806 |
| 0,700 | 17,780 | 0,221 | 5,613 | 0,163 | 4,140 | 0,0276 | 17,806 |
| 0,750 | 19,050 | 0,228 | 5,791 | 0,157 | 3,988 | 0,0276 | 17,806 |
| 0,800 | 20,320 | 0,237 | 6,020 | 0,152 | 3,861 | 0,0276 | 17,806 |
| 0,850 | 21,590 | 0,247 | 6,274 | 0,146 | 3,708 | 0,0276 | 17,806 |
| 0,900 | 22,860 | 0,257 | 6,528 | 0,139 | 3,531 | 0,0276 | 17,806 |
| 0,950 | 24,130 | 0,269 | 6,833 | 0,133 | 3,378 | 0,0276 | 17,806 |
| 1,000 | 25,400 | 0,282 | 7,163 | 0,126 | 3,200 | 0,0276 | 17,806 |
| 1,050 | 26,670 | 0,296 | 7,518 | 0,119 | 3,023 | 0,0276 | 17,806 |
| 1,100 | 27,940 | 0,311 | 7,899 | 0,112 | 2,845 | 0,0276 | 17,806 |
| 1,150 | 29,210 | 0,327 | 8,306 | 0,104 | 2,642 | 0,0276 | 17,806 |
| 1,200 | 30,480 | 0,343 | 8,712 | 0,098 | 2,489 | 0,0276 | 17,806 |
| 1,250 | 31,750 | 0,358 | 9,093 | 0,092 | 2,337 | 0,0276 | 17,806 |
| 1,300 | 33,020 | 0,373 | 9,474 | 0,086 | 2,184 | 0,0276 | 17,806 |
| 1,350 | 34,290 | 0,388 | 9,855 | 0,081 | 2,057 | 0,0276 | 17,806 |
| 1,400 | 35,560 | 0,401 | 10,185 | 0,076 | 1,930 | 0,0276 | 17,806 |
| 1,450 | 36,830 | 0,415 | 10,541 | 0,072 | 1,829 | 0,0276 | 17,806 |
| 1,500 | 38,100 | 0,427 | 10,846 | 0,068 | 1,727 | 0,0276 | 17,806 |
| 1,550 | 39,370 | 0,439 | 11,151 | 0,064 | 1,626 | 0,0276 | 17,806 |
| 1,600 | 40,640 | 0,449 | 11,405 | 0,061 | 1,549 | 0,0276 | 17,806 |
| 1,650 | 41,910 | 0,459 | 11,659 | 0,058 | 1,473 | 0,0276 | 17,806 |
| 1,700 | 43,180 | 0,467 | 11,862 | 0,056 | 1,422 | 0,0276 | 17,806 |
| 1,750 | 44,450 | 0,474 | 12,040 | 0,054 | 1,372 | 0,0276 | 17,806 |
| 1,800 | 45,720 | 0,480 | 12,192 | 0,052 | 1,321 | 0,0276 | 17,806 |
| 1,850 | 46,990 | 0,484 | 12,294 | 0,051 | 1,295 | 0,0276 | 17,806 |
| 1,900 | 48,260 | 0,487 | 12,370 | 0,050 | 1,270 | 0,0276 | 17,806 |
| 1,950 | 49,530 | 0,489 | 12,421 | 0,050 | 1,270 | 0,0276 | 17,806 |
| 2,000 | 50,800 | 0,551 | 13,995 | 0,113 | 2,870 | 0,0638 | 41,161 |

FIG 4C

40

FIC 5A

54
50
66
68  60' 60          58  58'
                                  62
70                                    62'
68'
70                          64'  64  70
        66'

FIC 5C

70
40
70

FIC 5B

| Z (inch) | Z (mm) | X (inch) | X (mm) | Y (inch) | Y (mm) | A (sq. inch) | A (mm²) |
|---|---|---|---|---|---|---|---|
| 0,000 | 0,000 | 0,094 | 2,388 | 0,094 | 2,388 | 0,0069 | 4,452 |
| 0,010 | 0,254 | 0,094 | 2,388 | 0,094 | 2,388 | 0,0069 | 4,452 |
| 0,020 | 0,508 | 0,095 | 2,413 | 0,094 | 2,388 | 0,0070 | 4,516 |
| 0,030 | 0,762 | 0,097 | 2,464 | 0,093 | 2,362 | 0,0071 | 4,581 |
| 0,040 | 1,016 | 0,099 | 2,515 | 0,093 | 2,362 | 0,0072 | 4,645 |
| 0,050 | 1,270 | 0,102 | 2,591 | 0,092 | 2,337 | 0,0074 | 4,774 |
| 0,060 | 1,524 | 0,105 | 2,667 | 0,092 | 2,337 | 0,0076 | 4,903 |
| 0,070 | 1,778 | 0,110 | 2,794 | 0,091 | 2,311 | 0,0079 | 5,097 |
| 0,080 | 2,032 | 0,114 | 2,896 | 0,090 | 2,286 | 0,0082 | 5,290 |
| 0,090 | 2,286 | 0,120 | 3,048 | 0,089 | 2,261 | 0,0085 | 5,484 |
| 0,100 | 2,540 | 0,126 | 3,200 | 0,088 | 2,235 | 0,0089 | 5,742 |
| 0,110 | 2,794 | 0,133 | 3,378 | 0,087 | 2,210 | 0,0093 | 6,000 |
| 0,120 | 3,048 | 0,140 | 3,556 | 0,086 | 2,184 | 0,0097 | 6,258 |
| 0,130 | 3,302 | 0,148 | 3,759 | 0,084 | 2,134 | 0,0102 | 6,580 |
| 0,140 | 3,556 | 0,156 | 3,962 | 0,083 | 2,108 | 0,0107 | 6,903 |
| 0,150 | 3,810 | 0,165 | 4,191 | 0,082 | 2,083 | 0,0113 | 7,290 |
| 0,160 | 4,064 | 0,175 | 4,445 | 0,080 | 2,032 | 0,0119 | 7,677 |
| 0,170 | 4,318 | 0,186 | 4,724 | 0,079 | 2,007 | 0,0125 | 8,065 |
| 0,180 | 4,572 | 0,197 | 5,004 | 0,077 | 1,956 | 0,0132 | 8,516 |
| 0,190 | 4,826 | 0,208 | 5,283 | 0,075 | 1,905 | 0,0139 | 8,968 |
| 0,200 | 5,080 | 0,221 | 5,613 | 0,074 | 1,880 | 0,0146 | 9,419 |
| 0,210 | 5,334 | 0,234 | 5,944 | 0,072 | 1,829 | 0,0154 | 9,936 |
| 0,220 | 5,588 | 0,247 | 6,274 | 0,070 | 1,778 | 0,0162 | 10,452 |
| 0,230 | 5,842 | 0,262 | 6,655 | 0,069 | 1,753 | 0,0170 | 10,968 |
| 0,240 | 6,096 | 0,277 | 7,036 | 0,067 | 1,702 | 0,0178 | 11,484 |
| 0,250 | 6,350 | 0,292 | 7,417 | 0,065 | 1,651 | 0,0186 | 12,000 |
| 0,260 | 6,604 | 0,307 | 7,798 | 0,064 | 1,626 | 0,0194 | 12,516 |
| 0,270 | 6,858 | 0,321 | 8,153 | 0,062 | 1,575 | 0,0201 | 12,968 |
| 0,280 | 7,112 | 0,334 | 8,484 | 0,061 | 1,549 | 0,0208 | 13,419 |
| 0,290 | 7,366 | 0,347 | 8,814 | 0,060 | 1,524 | 0,0215 | 13,871 |
| 0,300 | 7,620 | 0,360 | 9,144 | 0,059 | 1,499 | 0,0221 | 14,258 |
| 0,310 | 7,874 | 0,372 | 9,449 | 0,058 | 1,473 | 0,0226 | 14,581 |
| 0,320 | 8,128 | 0,384 | 9,754 | 0,057 | 1,448 | 0,0232 | 14,968 |
| 0,330 | 8,382 | 0,395 | 10,033 | 0,056 | 1,422 | 0,0237 | 15,290 |
| 0,340 | 8,636 | 0,406 | 10,312 | 0,055 | 1,397 | 0,0241 | 15,548 |
| 0,350 | 8,890 | 0,416 | 10,566 | 0,054 | 1,372 | 0,0245 | 15,806 |
| 0,360 | 9,144 | 0,425 | 10,795 | 0,053 | 1,346 | 0,0249 | 16,065 |
| 0,370 | 9,398 | 0,434 | 11,024 | 0,053 | 1,346 | 0,0253 | 16,323 |
| 0,380 | 9,652 | 0,442 | 11,227 | 0,052 | 1,321 | 0,0256 | 16,516 |
| 0,390 | 9,906 | 0,449 | 11,405 | 0,052 | 1,321 | 0,0259 | 16,710 |
| 0,400 | 10,160 | 0,455 | 11,557 | 0,051 | 1,295 | 0,0261 | 16,839 |
| 0,410 | 10,414 | 0,461 | 11,709 | 0,051 | 1,295 | 0,0263 | 16,968 |
| 0,420 | 10,668 | 0,465 | 11,811 | 0,051 | 1,295 | 0,0265 | 17,097 |
| 0,430 | 10,922 | 0,469 | 11,913 | 0,050 | 1,270 | 0,0266 | 17,161 |
| 0,440 | 11,176 | 0,472 | 11,989 | 0,050 | 1,270 | 0,0268 | 17,290 |
| 0,450 | 11,430 | 0,475 | 12,065 | 0,050 | 1,270 | 0,0268 | 17,290 |
| 0,460 | 11,684 | 0,476 | 12,090 | 0,050 | 1,270 | 0,0269 | 17,355 |
| 0,469 | 11,913 | 0,476 | 12,090 | 0,050 | 1,270 | 0,0269 | 17,355 |

FIG. 6A

26

EP 1 732 702 B1

FIG 6B

−70

| A = .0069 | A = .0069 | A = .0070 | A = .0071 | A = .0072 | A = .0074 | A = .0076 | A = .0079 | A = .0082 | A = .0085 |
|---|---|---|---|---|---|---|---|---|---|
| o | o | o | o | o | o | o | o | o | o |
| z = 0.000 | z = 0.010 | z = 0.020 | z = 0.030 | z = 0.040 | z = 0.050 | z = 0.060 | z = 0.070 | z = 0.080 | z = 0.090 |
| A = .0089 | A = .0093 | A = .0097 | A = .0102 | A = .0107 | A = .0113 | A = .0119 | A = .0125 | A = .0132 | A = .0139 |
| o | o | o | o | o | o | o | o | o | o |
| z = 0.100 | z = 0.110 | z = 0.120 | z = 0.130 | z = 0.140 | z = 0.150 | z = 0.160 | z = 0.170 | z = 0.180 | z = 0.190 |
| A = .0146 | A = .0154 | A = .0162 | A = .0170 | A = .0178 | A = .0186 | A = .0194 | A = .0201 | A = .0208 | A = .0215 |
| o | o | o | o | o | o | o | o | o | o |
| z = 0.200 | z = 0.210 | z = 0.220 | z = 0.230 | z = 0.240 | z = 0.250 | z = 0.260 | z = 0.270 | z = 0.280 | z = 0.290 |
| A = .0221 | A = .0226 | A = .0232 | A = .0237 | A = .0241 | A = .0245 | A = .0249 | A = .0253 | A = .0256 | A = .0259 |
| o | o | o | o | o | o | o | o | o | o |
| z = 0.300 | z = 0.310 | z = 0.320 | z = 0.330 | z = 0.340 | z = 0.350 | z = 0.360 | z = 0.370 | z = 0.380 | z = 0.390 |
| A = .0261 | A = .0263 | A = .0265 | A = .0266 | A = .0268 | A = .0268 | A = .0269 | A = .0269 | | |
| o | o | o | o | o | o | o | o | | |
| z = 0.400 | z = 0.410 | z = 0.420 | z = 0.430 | z = 0.440 | z = 0.450 | z = 0.460 | z = 0.469 | | |

FIG 6C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5601881 A
- US 5658386 A, Grimm

- US 200288881 B